# EUROPEAN PATENT SPECIFICATION

(11) **EP 4 419 720 B1**
(45) Date of publication and mention of the grant of the patent: **05.08.2026**
(21) Application number: 22802946.8
(22) Date of filing: 14.10.2022
(51) Int. Cl.: C21B 11/02, C21B 11/10, C21B 13/00, C21B 13/12, C21B 13/14

(54) **METHOD FOR REDUCING CARBON FOOTPRINT IN OPERATING A METALLURGICAL PLANT FOR PRODUCING PIG IRON**
VERFAHREN ZUR REDUZIERUNG DES KOHLENSTOFFFUSSABDRUCKS BEIM BETRIEB EINER METALLURGISCHEN ANLAGE ZUR HERSTELLUNG VON ROHEISEN
PROCÉDÉ DE RÉDUCTION DE L'EMPREINTE CARBONE LORS DE L'EXPLOITATION D'UNE INSTALLATION MÉTALLURGIQUE POUR LA PRODUCTION DE FONTE BRUTE

(30) Priority: 19.10.2021 LU 500764; 08.08.2022 LU 502634
(43) Date of publication of application: 28.08.2024
(73) Proprietor: Paul Wurth S.A., 1122 Luxembourg (LU)
(72) Inventor: KRULL, Jan, 17019 Varazze (IT); HANSMANN, Thomas, 16146 Genova (IT); PAPALIA, Katia, 16147 GENOVA (IT)
(74) Representative: Office Freylinger
(86) International application number: PCT/EP2022/078607
(87) International publication number: WO 2023/066794

(56) References cited:
- WO-A1-2013/029119
- CN-A- 110 317 917
- US-B2- 8 926 728

## Description

### Technical field

The present invention generally relates to a method for reducing carbon footprint in operating a metallurgical plant for producing pig iron and a metallurgical plant for producing pig iron with a reduced carbon footprint.

### Background Art

The necessity as well as the duty to reduce global CO₂ emissions is influencing the steel industry as one of the main responsible player. The worldwide decarbonisation is pushing the steelmakers towards a transition for a more-sustainable production, based on maximization of so-called "green" sources, like "green" electrical energy and renewable reductant and fuels, as replacement of fossil ones.

Hydrogen appears to be the new key factor for CO₂ reduction at the present days and in particular for a future decarbonised steel production. To fulfil the decarbonisation target, the hydrogen should be produced without carbon dioxide emissions, which means production for instance via electrolysis process fed by electrical energy from renewable sources. In this way, a "green" hydrogen is produced, completely free from carbon dioxide emissions. Nevertheless, green hydrogen production costs are currently high and, although a decreasing is foreseen in next years, this can compromise the feasibility of its application in the steelmaking sector, even in future scenarios, due to the huge energy and flowrate demand in iron and steel production processes. Patent documents US 8 926 728 B2 and WO 2013/029119 A1 further disclose alternative methods for reducing carbon footprint during a metallurgical process.

### Technical problem

It is an object of the present invention to provide a new route for a more sustainable pig iron production from iron ore fines, in particular a method for pig iron production suitable to be installed in metallurgical plants, such as in integrated steel works, which method should offer the flexibility to be operated in a range from limited to zero carbon dioxide emissions, such as for allowing either to ensure a more gradual transition in reducing carbon footprint or to operate at least at low carbon dioxide emissions in case of temporary non-availability of certain renewable resources.

### General Description of the Invention

In order to overcome the above-mentioned problem, the present invention proposes, in a first aspect, a method for reducing carbon footprint in operating a metallurgical plant for producing pig iron, the method comprising the steps of:
a) pre-heating iron ore fines in a first electric pre-heater based on Joule effect and/or microwave heating to a temperature above 600 °C, preferably from 700 to 900 °C, in particular from 750 °C to 850 °C, such as about 800 °C, to obtain pre-heated iron ore fines;
b) partially reducing the pre-heated iron ore fines in one or more fluidized bed reactors in the presence of a hot reducing gas to obtain partially reduced iron;
c) feeding the partially reduced iron to a submerged arc furnace comprising a bath of molten metal with a top slag layer;
d) further reducing and melting the partially reduced iron within the submerged arc furnace in the presence of a carbonaceous material to obtain molten pig iron;
wherein, in step b), the hot reducing gas comprises hydrogen, syngas, i.e. synthetic gas, off-gas of the fluidized bed reactor(s), off-gas of the submerged arc furnace, other (CO-containing) off-gases from the metallurgical plant, or mixtures thereof, wherein said syngas is produced from natural gas or biomethane, blast furnace gas, off-gas of the submerged arc furnace itself or another submerged arc furnace, other off-gases from the metallurgical plant, or mixtures of two or more thereof in one or more (catalytic or non-catalytic) reforming reactors in the presence of air or oxygen-enriched air, steam or carbon dioxide (depending on the reforming process used); wherein, in step b), the hot reducing gas has a temperature above 550 °C; and wherein, in step b), the partially reduced iron has a metallization degree of 55 to 75 %, preferably 60 to 70 %.

In a second aspect, the invention proposes a metallurgical plant for producing pig iron with a reduced carbon footprint, preferably by implementing the method for reducing carbon footprint in operating a metallurgical plant for producing pig iron according to the first aspect, the metallurgical plant comprising:
- a first electric pre-heater configured for pre-heating iron ore fines based on Joule effect and/or microwave heating into pre-heated iron ore fines at a temperature above 600 °C, preferably from 700 to 900 °C, in particular from 750 °C to 850 °C, such as about 800 °C;
- one or more fluidized bed reactors configured for partially reducing the pre-heated iron ore fines in the presence of a hot reducing gas into partially reduced iron to a metallization degree of 55 to 75 %, preferably 60 to 70 %;
- a submerged arc furnace comprising a bath of molten metal with a top slag layer, configured for receiving the partially reduced iron and further reducing and melting the partially reduced iron in the presence of a carbonaceous material to obtain molten pig iron;
wherein the metallurgical plant further comprises one or more (catalytic or non-catalytic) reforming reactors configured for producing a syngas from a feed of natural gas or biomethane, a feed of blast furnace gas, one or more feeds of off-gas of the submerged arc furnace and other off-gases from the metallurgical plant, or a feed of mixtures thereof and a feed of air or oxygen-enriched air, steam or carbon dioxide (as required by the chosen reforming process); wherein the metallurgical plant further comprises a feed of hydrogen; a hot reducing gas mixing device fluidly connected upstream to the one or more (catalytic or non-catalytic) reforming reactors and to the feed of hydrogen, and optionally to one or more of said feeds of an off-gas of the submerged arc furnace and of other off-gases of the metallurgical plant, or a feed of mixtures thereof and downstream to an inlet of the one or more fluidized bed reactors, said hot reducing gas mixing device being configured for providing hot reducing gas at a temperature above 550 °C comprising hydrogen, syngas, off-gas of the fluidized bed reactor(s), off-gas of the submerged arc furnace, other off-gases of the metallurgical plant, or mixtures of two or more thereof. The hot reducing gas mixing device may be a dedicated mixing unit or may only be the confluence of feed of (pre-heated) hydrogen, the syngas from the (catalytic or non-catalytic) reforming reactor, the off-gas of the fluidized bed reactor(s), the off-gas of a/the submerged arc furnace and the other off-gases of the metallurgical plant.

In the context of the invention, other off-gases from the metallurgical plant may be any available and appropriate CO-containing off-gas or mixtures of two or more thereof. They may be selected from one or more off-gases from a coke oven plant, a DRI (Direct Reduced Iron) plant, a basic oxygen furnace, an electric furnace (other than of the submerged arc furnace used in the present method), etc.

As such, the core of the proposed method and metallurgical plant is based on a partial (pre-)reduction step in one or more fluidized bed reactors to a metallization degree of 55 to 75 %, preferably 60 to 70 %, based only on hot gaseous reductants, followed by an electric smelter of the submerged arc furnace (SAF) type, where smelting and the completion of the reduction take place.

Consequently, the invention takes advantage of a combination of three findings: (1) that the kinetics curve of the iron ore fines reduction is very steep up to 70 to 75 %, meaning that the metallization degree of 75 % can be reached e.g. within 20 to 30 minutes, whereas the further metallization from 75 % to 95 % in the same conditions would then take more than two hours; (2) that this partial reduction can be obtained when effected with only hot reducing gas as a reductant, which moreover can be at least partially based on off-gases available on a metallurgical plant, such as the off-gas of the submerged arc furnace of the method itself or of other processes, but also other off-gases as further detailed below, (3) that this partial reduction can be obtained at least partially based on natural gas, biomethane or mixtures thereof and/or blast furnace gas, off-gas of the submerged arc furnace, other off-gases from the metallurgical plant or mixtures thereof, if they are converted in a catalytic or non-catalytic reforming reactor into an efficient reducing (syn)gas to be used directly as such or in combination with variable proportions of hydrogen and/or other CO rich available off-gas(es); and (4) that the further treatment in a submerged arc furnace in the presence of a solid carbonaceous material acting as further reductant allows to transform the only partially reduced iron ore into pig iron.

According to the invention, the hot reducing gas in step b), comprises or consists of hydrogen, syngas, off-gas of the fluidized bed reactor(s), off-gas of the submerged arc furnace, other (CO-containing) off-gases from the metallurgical plant, or mixtures thereof. Preferably, said hot reducing gas comprises or consists of at least syngas as defined in the present context, meaning a syngas produced from natural gas or biomethane, blast furnace gas, off-gas of the fluidized bed reactor(s), off-gas of the submerged arc furnace, other off-gases from the metallurgical plant, or mixtures of two or more thereof in one or more (catalytic or non-catalytic) reforming reactors in the presence of air or oxygen-enriched air, steam or carbon dioxide (depending on the reforming process used). It optionally advantageously comprises (additional) hydrogen, off-gas of the fluidized bed reactor(s), off-gas of the submerged arc furnace, other (CO-containing) off-gases from the metallurgical plant, or mixtures of two or more thereof. In embodiments, said hot reducing gas comprises or consists of said syngas, (additional) hydrogen and at least one gas selected from off-gas of the fluidized bed reactor(s), off-gas of the submerged arc furnace and other (CO-containing) off-gases from the metallurgical plant.

A preferred fluidized bed reactor for this purpose is a circulating type fluidized bed reactor providing high slip velocity between gas and solids resulting in high mass and heat transfer coefficients. Hence, the one or more fluidized bed reactors are preferably of the circulating type.

A Submerged Arc Furnace (SAF) is a special type of electric (arc) furnace suitable to perform reduction process. In the submerged arc furnace, the tips of electrodes are buried in the slag, where the active power is converted into thermal energy by Joule effect and where the reactions take place. The burden, consisting of lump ore and/or agglomerated fine and/or pre-reduced ore, fluxes and carbon carriers, descends according to the furnace throughput and is heated. When entering in the reaction zone, the oxides with the lowest melting point are liquefied. As the energy density increases towards the electrodes, all oxides are finally molten. Thus, carbo-thermic reduction by means of solid carbon bearing material take place. Depending on the temperature control and the slag melting point, the metal oxides are reduced, in the order of the demand of electric energy required for the reduction with carbon. The slag forms a liquid layer, made mainly by gangue, through which the reduced metal droplets descend to form the metal bath at the bottom of the hearth. The bath is carbon saturated, in order to guarantee the carbo-thermic reduction in the slag, and the final product is therefore hot pig iron, e.g. with a carbon content of 3 - 4 %. In the context of this invention, the term "submerged arc furnace" or "SAF" includes all the different possible electric arc furnace types optimized for the specific application, e.g Direct Current furnace, Alternate Current furnace, Open Bath Furnace, circular types, rectangular types, etc.

Consequently, the submerged arc furnace can be considered a flexible electric smelter, able to perform reduction of metal oxides, charged both as iron ore or as pre-reduced iron (or direct reduced iron, DRI). Generally speaking, for iron making applications, its advisable to have a pre-reduction step between the submerged arc furnace, to limit the electrical energy consumption and improve the overall plant efficiency. Nevertheless, a high DRI metallization is not required by a submerged arc furnace, unlike in the case of state-of-art Electric Arc Furnace (EAF). This allowed the inventors to find the optimal trade-off operational point for the present invention of 55 to 75 %, preferably 60 to 70 % of metallization, being the last part of metalization performed in a separated reactor, which has been experienced as the most critical part, due to availability issues (mainly for sticking problems) and constraints which can compromize the feasibility, such as lower productivity, higher residence time, lower efficiency, etc.

Furthermore, the method and metallurgical plant described herein are particularly adapted to make use of renewable resources as energy source and solid and gaseous reducing agents, such as "green" hydrogen, bio-char and "green" electricity. Moreover, the method can be flexibly and gradually converted to a full green operation (zero carbon dioxide emission), depending on the resources availability: hydrogen for the fluidized bed reactor can be produced by electrolysis using (only) renewable electricity ("green" H₂) or produced by fossil resources with application of CO₂ capture technology ("blue" H₂) or produced by fossil resources ("grey" H₂); fossil coal and/or bio-char can be used in the submerged arc furnace; other metallurgic plant off-gases, such as integrated steelworks gases, can be fed into the fluidized bed reactor. The method is also particularly aimed at allowing for a mixed operation with (varying proportions of) hydrogen, recirculated CO-containing metallurgical off-gas(es) and syngas, with an enhanced flexibility in conversion to "green" operation depending on sources availability and costs. In this regard, the proposed method can be flexibly operated from completely avoiding carbon dioxide emissions to limited emissions, depending on type and quantity of energy resources used: the same metallurgical plant can be fed only by renewable energy sources, reducing gas, biomethane and solid reductant (carbonaceous material), with zero CO₂ emissions or it can still be partially fed by fossil resources (e.g. grey/blue hydrogen, coal, natural gas, electricity from fossil fuel, etc.) with a limited CO₂ footprint, but in any case lower than currently used iron-making technologies.

Biomethane is a renewable energy source derived from agricultural biomass (dedicated crops, by-products and agricultural waste and animal waste), agro-industrial (waste from the food processing chain) and the Organic Fraction Municipal Solid Waste (OFMSW). Biomethane is obtained in two phases: raw biogas production - predominantly through anaerobic digestion of biomass - and subsequent removal of non-compatible components (CO₂), a process also known as "upgrading". Biomethane has a quality similar to fossil natural gas, having a methane concentration of 90 % or greater. Hence, the product of the present invention is a "green" pig iron which can be produced totally CO₂-free, if only renewable sources are used as energy input and solid and gaseous reductants.

As a consequence, in advantageous embodiments, at least part, preferably all of the electric energy needed in the method or in the metallurgical plant is renewable electricity. In particular, at least part the electrical energy needed in the pre-heater(s) and the submerged arc furnace is renewable electricity.

Alternatively or additionally, the carbonaceous material in step d) comprises (or consists of) bio-char produced by biomass, optionally including demolition wood, such as up to 40 wt.-%, and/or waste plastics, such as up to 20 wt.-%. The carbonaceous material can be fed to the submerged arc furnace as such and separately form the partially reduced iron. It may be of benefit however to feed the carbonaceous material at least partially to the submerged arc furnace in combination or admixture with the partially reduced iron. One particularly advantageous way to add said carbonaceous material will be described herein below.

Moreover, the process can easily be configured to recycle a certain percentage of integrated steel solid residues, either by addition to the feed of iron ore fines in step a) and/or to the pre-heated iron ore fines obtained in step a) and/or to the partially reduced iron obtained in step b), in accordance with the "circular economy" concept, with additional both environmental and economic benefits.

The reforming in the present invention can be done in any appropriate reforming reactor or combinations of two or more reforming reactors, which may be of the same type or use a different technology and are known in the art of syngas production. The reforming reactors are either catalytic or non-catalytic reforming reactors and examples of such reactors are steam reforming reactors, such as catalytic steam reforming (CSR) reactors, dry reforming (DR) reactors, autothermal reforming (ATR) reactors, partial oxidation (POX) reactors, such as catalytic partial oxidation (CPO) reactors, membrane reforming (MR) reactors, or any combination of two or more different types of reactors.

Steam reforming (SMR) is a process for producing syngas by reaction of hydrocarbons with water in the form of steam. The reaction can be represented by the following reaction:

CH₄ + H₂O ↔ CO + 3 H₂ (1)

Dry reforming (DR), also known as carbon dioxide reforming, is a process of producing syngas from the reaction of hydrocarbons such as methane with carbon dioxide with the aid of noble metal catalysts, such as typically Ni or Ni alloys. The dry reforming reaction may be represented by:

CH₄ + CO₂ ↔ 2 CO + 2 H₂ (2)

Autothermal reforming (ATR) uses oxygen and carbon dioxide or steam in a reaction with methane to form syngas. The reaction takes place in a single chamber where the methane is partially oxidized. The reaction is exothermic. When the ATR uses carbon dioxide, the H₂:CO ratio produced is 1:1; when the ATR uses steam, the H₂:CO ratio produced is 2.5:1. The outlet temperature of the syngas is between 950-1100 °C. In addition to reaction (1), ATR introduces the following reaction:

CH₄ + 0.5 O₂ ↔ CO + 2 H₂ (3)

Partial oxidation (POX) occurs when a substoichiometric fuel-air mixture is partially combusted in a reformer, creating a hydrogen-rich syngas. A distinction is made between thermal partial oxidation (TPO) and catalytic partial oxidation (CPO).

The process of catalytic partial oxidation (CPO) is also based on reaction (3), where oxygen can come from air or oxygen-enriched air or a combination of oxygen and nitrogen conducted by colliding for few milliseconds, gaseous premixed reactant flows through extremely hot catalytic surfaces. The fast and selective chemistry that is originated is confined inside a thin solid-gas interphase zone surrounding the catalyst particles. Here, the molecules typically spend very short time at temperatures variable between 600 and 1200 °C. A key issue for the technological exploitation is in the possibility of avoiding the propagation of reactions into the gas phase, which has to remain at a "relatively low" temperature. This condition favors the formation of primary reaction products (namely CO and H₂) inhibiting chain reactions.

A membrane reforming (MR) reactor is a reactor wherein oxygen separation, steam reforming (SR) and partial oxidation (POX) are combined in a single step.

In preferred embodiments, the hydrogen and/or the blast furnace gas, the off-gas of the submerged arc furnace, the other off-gases from the metallurgical plant, or mixtures thereof is/are pre-heated in one or more further (e.g. second or second and third) electric pre-heater(s) based on Joule effect and/or microwave heating to a temperature above 700 °C before being fed to the fluidized bed reactor, preferably before being mixed to the (already hot) syngas from the catalytic or non-catalytic reforming reactor, said syngas having been produced from natural gas or biomethane and, optionally a certain percentage of blast furnace gas. In case of circulating fluidized bed reactor(s), their exhaust is preferably re-heated before being recirculated, either in a separate electric heater or advantageously also in the second electric pre-heater.

In further preferred embodiments, the iron ore fines have a grainsize distribution in the range 0,05 - 2 mm, advantageously in the range of 0,1 - 1 mm.

If necessary or desired, the method further comprises in step b) the (hot) briquetting of the partially reduced iron ore fines to obtain briquetted partially reduced iron, which preferably are the hot-charged to the submerged arc furnace. As already briefly mentioned above, the carbonaceous material is advantageously at least partially (such as to at least 60 wt.-%, e.g. at least 80 wt.-% or even at least 90 wt-%), preferably entirely fed to the submerged arc furnace in combination or admixture with the partially reduced iron. Most preferably, at least part of, preferably the entirety of the carbonaceous material is first introduced into the briquetted partially reduced iron during hot briquetting and then fed to the submerged arc furnace in step d). In such embodiments, the carbonaceous material is thus briquetted with the partially reduced iron into (mixed carbonaceous and) partially reduced iron briquettes, ready for use in step d). The carbonaceous material added to the briquettes and that added separately may be different, such as coal and bio-char, etc. Mixing a certain fraction of carbonaceous fine material with the DRI fines to produce DRI briquettes with a certain carbon content may be useful to optimize the electric smelter process, including better control of the final C content of the hot metal. The remaining part of carbonaceous materials required for HBI smelting can be separately charged into the electric smelter, as done in state-of-art processes.

In fact, in the state-of-art electric smelter processes for Direct Reduced Iron (DRI) and Hot Briquetted Iron (HBI) smelting, such as in an Electric Arc Furnace or Submerged Arc Furnace, solid carbon is generally used to complete iron oxide reduction: solid coal is top-charged in the electric furnace together with other input feed, in addition to the carbon content from DRI.

However, the inventors found that the carbonaceous material added to the partially reduced iron (before its feeding to the electric arc furnace) is more efficient within the electric smelter process than carbonaceous material fed separately, such as externally charged coal/bio-char. Indeed, the inventors noted lower consumptions, optimized process parameters and more flexible carbon content to be reached in the final product. It is admitted by the inventors that these advantages are due to the fact that the carbonaceous material admixed and/or briquetted with the partially reduced iron is in fine grainsize form and homogenously mixed with the partially reduced iron fines , making more efficient the coal use in the smelter process, while in the separate coal charging, some undesirable phenomena have been observed, such as coal carry-over with the offgas, carbon burnt out and lower reduction efficiency, all of which lead to higher consumptions and less productivity.

One topic of particular interest is the C content in the metal product which is required depending on its use and the C content which is provided during the early steps of the present process due to the context of its installation in integrated steelworks. In fact, in order to be able to exploit the availability of existing downstream processes (e.g. Blast Oxygen Furnace), > 4 wt.-% C content (typically 4.5 wt.-%) are required in the produced hot metal, similar to Blast Furnace Hot Metal. If this target is met, there is no need of installing/modifying the existing downstream hot metal treatment plant.

However, the C content of the partially reduced iron strongly depends on the direct reduction process, and in case of gas based direct reduction as in the present method, a certain C content in the partially reduced iron basically stems from CO-containing reductants, such as syngas. The use of a reducing gas with low CO content and thus higher hydrogen content than the reducing gas from natural gas reforming processes commonly used in state-of-art technologies, means lower carbon content in the partially reduced iron, such as in a range of 0.1 to 3 wt.-%, depending on the specific reduction reactor type. This also means that the total replacement of C containing fuel and reductant with hydrogen, will lead to partially reduced iron with zero or almost zero carbon content.

In particular in the cases of such zero or very low carbon contents, direct coal charging in the electric furnace is not optimal for the smelting process in step d), which as explained above lead to higher consumption, lower productivity and lower flexibility in product characteristics (mainly referring to carbon content in the metal product). Moreover, this would more than likely increase the CO₂ footprint of the overall electric smelter process as well.

As a conclusion, the present invention aims at producing "green" pig iron inside an integrated steelwork or metallurgical plant, exploiting the availability of CO-rich syngas enhanced by the enrichment with syngas from catalytic or non-catalytic reforming of natural gas or biomethane, limiting the degree of reduction of the iron ore fines and completing the reduction in a submerged arc furnace using different renewable energy sources and selecting specific solutions to improve the economic feasibility of the application. The method is flexible to be also operated totally or partially with fossil fuel and reductant, depending on specific local availability and costs, such that a certain carbon dioxide footprint may be foreseen, but limited in comparison with state-of-art routes and including the possibility of further reduction moving towards higher amount of "green" resources, when available at feasible costs.

### Brief Description of the Drawings

Preferred embodiments of the invention will now be described, by way of example, with reference to the accompanying drawing:

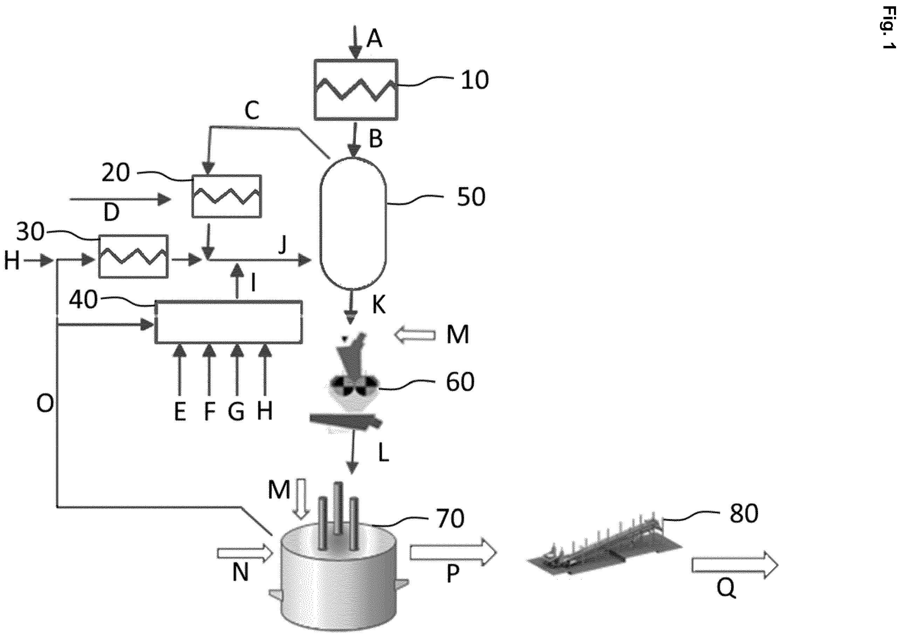

Fig. 1 is a schematic view of an embodiment of a metallurgical plant for producing pig iron with a reduced carbon footprint or a method for reducing carbon footprint in operating a metallurgical plant for producing pig iron.

Further details and advantages of the present invention will be apparent from the following detailed description of several not limiting embodiments with reference to the attached drawing.

### Description of Preferred Embodiments

The plant is fed by iron ore fines, even low grade, with a grainsize distribution generally in the range from 0,05 - 5 mm, such as from 0,1 - 1 mm, which could include pre-agglomerated ultra-fines particles. In this context, it is noteworthy that iron ore fines generally contain hematite, goethite and magnetite with varying iron content having a bulk density range from 1,500 to 3,500 kg/m³. Such iron ore fines are particularly well suited for methods as disclosed herein, which comprise the partial reduction when fluidized with reducing gases. Should integrated steel solid residues be added to the feed of step a), they preferably have particle sizes similar to those of the iron ore fines. The iron ore fines A are first conveyed from a storage area to the a first elecrtic pre-heater 10. Pre-heating is performed by means of an electric pre-heater based on Joule effect or microwave heating, optionally coupled with a heat recovery system, exploiting the available residual heat from the integrated steelwork or the fludized bed reactor syngas.

The preheated iron ore fines B are then conveyed to a fluidized bed charging system through handling equipment suitable for fines transportation, such as chain conveyors or pneumatic transport, to be fed to a fluidized bed reactor 50. The fluidized bed reactor 50 preferably is of the circulating type, wherein the exhaust of fluidized bed reactor C is recirculated, preferably after being (p)re-heated in the second electric pre-heater 20, allowing for an enhanced flexilibity in fines grainsize distribution, as well as the optimal process efficiency, with regards to thermal exchanges and residence time.

Green or blue or grey hydrogen (or a mixture of them) D can be used as reducing gas J in the fluidized bed reactor 50. Due to the completely endothermic iron oxide reduction reactions with hydrogen D, other (recirculated) metallurgical plant offgas(es) H, syngas I, or mixtures thereof J, not only iron ore fines, but preferably also hydrogen and any other metallurgical plant off gases are pre-heated in one or more further pre-heaters 10, 20, 30 before being fed into the fluidized bed reactor 50, up to a temperature of approx. 800°C. In preferred embodiments, a second electric pre-heater 20 is provided for pre-heating hydrogen D and the recirculated exhaust of fluidized bed reactor C, optionally coupled with an heat recovery system from available steelwork gases; and a third electric pre-heater 30 is provided for pre-heating the off-gas of the submerged arc furnace and any other metallurgical plant off gases (except blast furnace gas, which is fed to the catalytic or non-catalytic reforming reactor). This allows to reduce the consumption of hydrogen used as a fuel.

The hydrogen D fed into the fluidized bed reactor 50 can be partially replaced by a syngas I and other (CO-containing) off-gas(es) of the metallurgical plant H. Said syngas, rich in carbon monoxide and with a certain amount of hydrogen, which is produced in a catalytic or non-catalytic reforming reactor or reformer 40, fed by natural gas and/or biomethane F, blast furnace gas G, off-gas O of the submerged arc furnace and/or other off-gases from the metallurgical plant H and air or oxygen enriched air (autothermal reforming or (catalytic) partial oxidation), steam (autothermal reforming or steam reforming) or carbon dioxide (dry reforming) E depending on the reforming technology used, see reactions (1) to (3) above. In other words, if off-gas O of the submerged arc furnace and/or other off-gases H from the metallurgical plant are used, they can be used either as such or with prior reforming, or both. The main advantage of this "recycling" is the reduction of hydrogen consumption, exploiting availability of CO-rich gas at limited calorific value, such as blast furnace gas, which can be more efficienlty used in a reduction process than for energy production. Moreover the use of CO containing syngas in the fluidized bed reactor 50 provides benefits to the process, due to the exothermic CO combustion reaction with heat release and to a certain carbon content remaining in the partially reduced iron K or L, with consequent reduction of the consumption of carbonaceous material M, such as coal/bio-char, in the submerged arc furnace 70, more efficient reduction process in the submerged arc furnace 70 and limited re-oxidation phenomena in the hot partially reduced iron K or L handling. The carbonaceous material M may also comprise further additives, such as slag forming agents, etc.

The partially reduced iron K in the form of fines, with a pre-reduction degree of metallization limited at e.g. about 60-70% are discharged and conveyed from the reactor in an inert atmosphere (e.g. nitrogen or argon) to avoid re-oxidation phenomena. Then, the partially reduced iron fines K are either directly fed to the submerged arc furnace 70, or preferably hot briquetted in a hot briquetting unit 60 in order to improve their mechanical characteristics, before being handled into the downstream electric arc furnace charging system. The selection among hot partially reduced iron charging into submerged arc furnace as fines or briquettes depends on the specific project conditions (such as raw materials characteristics, utilities, price, etc.), impacting on submerged arc furnace design and performance. If required by the hot briquetting process (depending on the specific equipment type), the hot partially reduced iron fines, discharged from the fluidized bed reactor at a temperature of 600-650°C can be heated up to 700-750°C, via for instance a third electric heater (e.g. based on Joule effect concept or on microwave heating). In advantageous embodiments, at least part of the carbonaceous material can be fed to the electric arc furnace in combination or admixture with the partially reduced iron. It is of particular benefit to introduce at least part of the carbonaceous material within the briquetted reduced iron. Indeed, the concept of hot briquetting the partially reduced fines with a certain amount of carbonaceous material, such as coal, is advantageous to optimize the smelting process. In comparison to the partially reduced iron fines hot briquetting without carbonaceous material, this beneficial solution to help facilitating a proper feeding to the electric furnace may further include:
- the installation of additional handling equipment, such as in an inert atmosphere, for carbonaceous material (such as coal) handling and mixing with partially reduced iron,
- a preferably modified hot briquetting machine design (e.g. size, pressure, etc.) to be suitable for treating the different input feed,
- optionally, a carbonaceous material preheating device (e.g. to up to 200 °C - 400 °C), if required by the hot briquetting process, depending on specific partially reduced iron fines and carbonaceous material properties (mainly: temperature, metallization degree of the partially reduced iron, quantity of the carbonaceous material, etc.).

Such a carbonaceous material and partially reduced iron briquetting allows to homogenize and compact the admixture of carbonaceous material and partially reduced iron fines to limit the loss of efficiency of external carbonaceous material charging into the electric smelter, mainly due to coal carry-over, burn out and coarser grainsize.

The briquetting system (and possibly upstream and downstream thereof) will preferably be configured to work under an inert atmosphere to avoid an undesirable re-oxidation of the partially reduced iron.

The partially reduced iron in the form of fines K or briquettes L (containing carbonaceous material or not) are then hot charged at approx. 700°C into the electric smelter, submerged arc furnace type 70, where the reduction completion and smelting is performed by a carbonaceous material M (contained in the briquettes L and/or added separately).

For a completely carbon dioxide free pig iron production, in the proposed invention, bio-char is used as the carbonaceous material M (reductant) in the submerged arc furnace 70 (added as part of the briquettes L and/or seapartely), instead of the conventionally used fossil coal, such as anthracite or coke. Bio-char can be produced by biomass torrefaction process, eventually including a certain percentage of demolition wood (up to 40%) and waste plastics (up to 20%). The bio-char characteristics depend on the type of input biomass and torrefaction process, being in any case suitable for the use into the submerged arc furnace 70.

The submerged arc furnace 70 is able also to recycle a certain percentage of integrated steelworks solid residues as a solid waste injection N, such as for instance dust and sludge from blast furnace or basic oxygen furnace, mill scales, de-dusting dust, etc. Solid residue recycling improves the feasibility of the present invention application, as well as the environmental benefit, due to the avoiding of landfill, the recovery of the iron, carbon and zinc content of solid waste. A residues flowrate up to 5 % of total submerged arc furnace input feed can be directly injected in the furnace metal bath, in the form of dry dust (moisture <3%) with a grainsize 100 % < 250 micron. Wet and/or coarse residues have to be pre-treated in a dryer and/or a mill before electric submerged arc furnace injection, while low moisture and fines dust (such for instance stockhouse dust, BOF dust, ...) can be directly injected without any pre-treatment. In case of solid waste injection flowrate higher than 5 % of total submerged arc furnace input feed, the additional waste can be top charged in form of dry pellets or cold briquettes, after a suitable cold agglomeration treatment, consisiting in mixing, pellettizing or briquetting and drying process. In case of carbon bearing solid reasidues, such for instance blast furnace sludge and dust, no additional bio-char is required for waste iron ore reduction and an overall saving in bio-char (or coal) consumption can be obtained.

The flexibility of submerged arc furnace type electric smelter operations allows to accept also a not optimal quality of partially reduced iron briquettes, and a certain amount of partially reduced iron briquette fines coming from the screening of hot briquetting; this improves the availability of hot briquetting process, avoinding totally or partially the fines internal recirculation.

The hot reducing gas J fed into the fluidized bed 50 can be a mixture of different proportions of hydrogen D, of the CO-rich submerged arc furnace offgas O, of other recirculated metallurgical off-gas(es) H and of the syngas I produced in the catalytic or non-catalytic reforming reactor/reformer 40 fed by natural gas or biomethane F, blast furnace gas G, off-gas O of the submerged arc furnace and/or other off-gases from the metallurgical plant H and air or oxygen-enriched air, steam or carbon dioxide E: The product of this catalytic or non-catalytic reforming reactor 40 is a syngas I suitable to be used as a reducing gas J in the fluidized bed reactor, e.g. by replacing a certain amount of hydrogen or other recirculated offgas(es). This option can have a significant OpEx advantage due to the replacement of a certain amount of hydrogen D with the syngas I produced by natural gas or biomethane F and blast furnace furnace gas G, off-gas O of the submerged arc furnace and/or other off-gases from the metallurgical plant H.

The proposed method and metallurgical plant has a modular size: each fuidized bed reactor 50 can reach e.g. a maximum production of 550 kty DRI, each submerged arc furnace 70 a maximum size of 1.5 Mtpy of hot pig iron P.

The hot pig iron P may be thereafter cast as cast pig iron Q in a casting unit 80.

### Legend:

- 10: First electric pre-heater
- 20: Second electric pre-heater
- 30: Third electric pre-heater
- 40: Reforming reactor
- 50: Fluidized bed reactor
- 60: Hot briquetting unit
- 70: Submerged arc furnace
- 80: Casting unit
- A: Iron ore fines
- B: Pre-heated iron ore fines
- C: Exhaust of fluidized bed reactor
- D: Hydrogen
- E: Air or oxygen enriched air, steam or carbon dioxide
- F: Natural gas or biomethane
- G: Blast furnace gas
- H: Other metallurgical plant off-gas(es)
- I: Syngas
- J: (Hot) reducing gas
- K: Partially reduced iron (fines)
- L: Partially reduced iron (briquettes)
- M: Carbonaceous material (and additives)
- N: Solid waste injection
- O: Submerged arc furnace off-gas
- P: Hot metal/molten pig iron
- Q: Cast pig iron

## Claims

1. A method for reducing carbon footprint in operating a metallurgical plant for producing pig iron (P), the method comprising the steps of:
a) pre-heating iron ore fines (A) in a first electric pre-heater (10) based on Joule effect and/or microwave heating to a temperature above 600 °C to obtain pre-heated iron ore fines (B);
b) partially reducing the pre-heated iron ore fines (B) in one or more fluidized bed reactors (50) in presence of only hot reducing gas (J) as a reductant to obtain partially reduced iron (K, L);
c) feeding the partially reduced iron (K, L) to a submerged arc furnace (70) comprising a bath of molten metal with a top slag layer;
d) further reducing and melting the partially reduced iron (K, L) within the submerged arc furnace (70) in the presence of a carbonaceous material (M) to obtain molten pig iron (P);
wherein, in step b), the hot reducing gas (J) comprises hydrogen (D), syngas (I), off-gas (O) of the submerged arc furnace, other off-gases (H) from the metallurgical plant, or mixtures of two or more thereof, wherein said syngas (I) is produced from natural gas or biomethane (F), blast furnace gas (G), off-gas (O) of the submerged arc furnace, other off-gases (H) from the metallurgical plant, or mixtures of two or more thereof in one or more reforming reactors (40) in the presence of air or oxygen-enriched air, steam or carbon dioxide (E); wherein, in step b), the hot reducing gas (J) has a temperature above 550 °C; and wherein, in step b), the partially reduced iron (K, L) has a metallization degree of 55 to 75 %, preferably 60 to 70 %.

2. The method according to claim 1, wherein the one or more fluidized bed reactors (50) is/are of a circulating type.

3. The method according to claim 1 or 2, wherein the hydrogen (D) is pre-heated in a second electric pre-heater (20) and off-gas (O) of the submerged arc furnace and optional other off-gases (H) from the metallurgical plant are pre-heated in a third electric pre-heater (30), both second and third pre-heaters being independently based on Joule effect and/or microwave heating to a temperature above 700 °C.

4. The method according to any one of the preceding claims, wherein the carbonaceous material (M) in step d) comprises or consists of bio-char produced by biomass, optionally including demolition wood, such as up to 40 wt.-%, and/or waste plastics, such as up to 20 wt.-%.

5. The method according to any one of preceding claims, wherein the iron ore fines (A) have a grainsize distribution in the range 0,1 - 1 mm.

6. The method according to any one of the preceding claims, wherein step b) further comprises hot briquetting partially reduced iron ore fines (K) to obtain briquetted partially reduced iron (L).

7. The method according to claim 6, wherein the carbonaceous material (M) is at least partially, preferably entirely, introduced into the briquetted partially reduced iron (L) during hot briquetting and fed to submerged arc furnace (70) in step d).

8. The method according to any one of the preceding claims, wherein the other off-gases (H) of the metallurgical plant comprise one or more of off-gases from a coke oven plant, a Direct Reduced Iron plant and basic oxygen furnace.

9. The method according to any one of the preceding claims, wherein all electrical energy needed in the pre-heater(s) and the submerged arc furnace, preferably in all of the steps of the method is renewable electricity.

10. A metallurgical plant for producing pig iron (P) with a reduced carbon footprint, preferably by implementing the method according any of claims 1 to 8, the metallurgical plant comprising:
- a first electric pre-heater (10) configured for pre-heating iron ore fines (A) based on Joule effect and/or microwave heating into pre-heated iron ore fines (B) at a temperature above 600 °C;
- one or more fluidized bed reactors (50) configured for partially reducing the pre-heated iron ore fines (B) in the presence of only hot reducing gas (J) as a reductant into partially reduced iron (K, L) to a metallization degree of 55 to 75 %, preferably 60 to 70 %;
- a submerged arc furnace (70) comprising a bath of molten metal with a top slag layer, configured for receiving the partially reduced iron (K, L) and further reducing and melting the partially reduced iron (K, L) in the presence of a carbonaceous material (M) to obtain molten pig iron (P);
wherein the metallurgical plant further comprises one or more reforming reactors (40) configured for producing a syngas (I) from a feed of natural gas or biomethane (F), a feed of blast furnace gas (G), one or more feeds of off-gas (O) of the submerged arc furnace and other off-gases (H) from the metallurgical plant, or a feed of mixtures of two or more thereof, and a feed of air or oxygen-enriched air, steam or carbon dioxide (E); wherein the metallurgical plant further comprises a feed of hydrogen (D); a hot reducing gas mixing device fluidly connected upstream to the one or more reforming reactors (40) and to the feed of hydrogen (D), and optionally to one or more of said feeds of an off-gas (O) of the submerged arc furnace and of other off-gases (H) of the metallurgical plant, or a feed of mixtures of two or more thereof, and downstream to an inlet of the one or more fluidized bed reactors (50), said hot reducing gas mixing device being configured for providing hot reducing gas (J) at a temperature above 550 °C comprising hydrogen (D), syngas (I), off-gas (O) of the submerged arc furnace, other off-gases (H) of the metallurgical plant, or mixtures of two or more thereof.

11. The metallurgical plant according to claim 10, wherein the one or more fluidized bed reactors (50) is/are of a circulating type.

12. The metallurgical plant according to claim 10 or 11, comprising a second electric pre-heater (20) based on Joule effect and/or microwave heating fluidly connected between said feed of hydrogen (D) and the hot reducing gas mixing device, and a third electric pre-heater (30) based on Joule effect and/or microwave heating fluidly connected between said one or more feeds of off-gas (O) of the submerged arc furnace and optionally other off-gases (H) of the metallurgical plant and the hot reducing gas mixing device, said second and third electric pre-heaters (20, 30) being configured for pre-heating the relevant off-gas(es) and syngas to a temperature above 700 °C.

13. The metallurgical plant according to any of claims 10 to 12, wherein the carbonaceous material (M) is provided from a source comprising or consisting of bio-char produced by biomass, optionally including demolition wood, such as up to 40 wt.-%, and/or waste plastics, such as up to 20 wt.-%.

14. The metallurgical plant according to any one of claims 10 to 13, further comprising a hot briquetting apparatus configured for briquetting partially reduced iron ore fines (K) into briquetted partially reduced iron (L).

15. The metallurgical plant according to any one of claims 10 to 14, wherein the metallurgical plant comprises one or more among, a coke oven plant, a Direct Reduced Iron plant, a blast furnace and basic oxygen furnace, providing said other off-gases (H) of the metallurgical plant.

16. The metallurgical plant according to any one of claims 10 to 15, wherein all electrical energy needed in the pre-heater(s) and the submerged arc furnace, preferably the electrical energy needed for all electric devices of the metallurgical plant, is renewable electricity.

## Patentansprüche

1. Verfahren zur Verringerung des CO₂-Fußabdrucks beim Betrieb einer metallurgischen Anlage zur Herstellung von Roheisen (P), wobei das Verfahren die folgenden Schritte umfasst:
a) Vorwärmen von Eisenerzfeinanteilen (A) in einem ersten elektrischen Vorwärmer (10) auf der Grundlage des Joule-Effekts und/oder Mikrowellenerwärmung auf eine Temperatur von über 600 °C, um vorgewärmte Eisenerzfeinanteile (B) zu erhalten;
b) teilweises Reduzieren der vorgewärmten Eisenerzfeinanteile (B) in einem oder mehreren Wirbelschichtreaktoren (50) in Gegenwart von ausschließlich heißem Reduktionsgas (J) als ein Reduktionsmittel, um teilweise reduziertes Eisen (K, L) zu erhalten;
c) Zuführen des teilweise reduzierten Eisens (K, L) zu einem Lichtbogen-Reduktionsofen (70), welcher ein Bad aus geschmolzenem Metall mit einer oberen Schlackenschicht umfasst;
d) weiteres Reduzieren und Schmelzen des teilweise reduzierten Eisens (K, L) innerhalb des Lichtbogen-Reduktionsofens (70) in Gegenwart eines kohlenstoffhaltigen Materials (M), um geschmolzenes Roheisen (P) zu erhalten;
wobei in Schritt b) das heiße Reduktionsgas (J) Wasserstoff (D), Synthesegas (I), Abgas (O) des Lichtbogen-Reduktionsofens, andere Abgase (H) aus der metallurgischen Anlage oder Mischungen aus zwei oder mehr davon umfasst, wobei das Synthesegas (I) aus Erdgas oder Biomethan (F), Hochofengas (G), Abgas (O) des Lichtbogen-Reduktionsofens, anderen Abgasen (H) aus der metallurgischen Anlage oder Mischungen aus zwei oder mehr davon in einem oder mehreren Reformierungsreaktoren (40) in Gegenwart von Luft oder mit Sauerstoff angereicherter Luft, Wasserdampf oder Kohlendioxid (E) hergestellt wird; wobei in Schritt b) das heiße Reduktionsgas (J) eine Temperatur von über 550 °C aufweist; und wobei in Schritt b) das teilweise reduzierte Eisen (K, L) einen Metallisierungsgrad von 55 bis 75 %, vorzugsweise 60 bis 70 %, aufweist.

2. Verfahren nach Anspruch 1, wobei der eine oder die mehreren Wirbelschichtreaktoren (50) vom Zirkulationstyp ist/sind.

3. Verfahren nach Anspruch 1 oder 2, wobei der Wasserstoff (D) in einem zweiten elektrischen Vorwärmer (20) vorgewärmt wird und das Abgas (O) des Lichtbogen-Reduktionsofens und gegebenenfalls weitere Abgase (H) aus der metallurgischen Anlage in einem dritten elektrischen Vorwärmer (30) vorgewärmt werden, wobei sowohl der zweite als auch der dritte Vorwärmer unabhängig auf dem Joule-Effekt und/oder einer Mikrowellenerwärmung auf eine Temperatur über 700 °C basieren.

4. Verfahren nach einem der vorhergehenden Ansprüche, wobei das kohlenstoffhaltige Material (M) in Schritt d) Biokohle umfasst oder aus dieser besteht, die aus Biomasse hergestellt wurde, gegebenenfalls einschließlich Abbruchholz, beispielsweise bis zu 40 Gew.-%, und/oder Kunststoffabfällen, beispielsweise bis zu 20 Gew.-%.

5. Verfahren nach einem der vorhergehenden Ansprüche, wobei die Eisenerzfeinanteile (A) eine Korngrößenverteilung im Bereich von 0,1 bis 1 mm aufweisen.

6. Verfahren nach einem der vorhergehenden Ansprüche, wobei Schritt b) ferner das Heißbrikettieren von teilweise reduzierten Eisenerzfeinanteilen (K) umfasst, um brikettiertes, teilweise reduziertes Eisen (L) zu erhalten.

7. Verfahren nach Anspruch 6, wobei das kohlenstoffhaltige Material (M) während des Heißbrikettierens zumindest teilweise, vorzugsweise vollständig, in das brikettierte, teilweise reduzierte Eisen (L) eingebracht und in Schritt d) dem Lichtbogen-Reduktionsofen (70) zugeführt wird.

8. Verfahren nach einem der vorhergehenden Ansprüche, wobei die anderen Abgase (H) der metallurgischen Anlage ein oder mehrere der Abgase aus einer Kokerei, einer Direktreduktionsanlage und einem Sauerstoff-Blaskonverter umfassen.

9. Verfahren nach einem der vorhergehenden Ansprüche, wobei die gesamte im Vorwärmer bzw. in den Vorwärmern und im Lichtbogen-Reduktionsofen benötigte elektrische Energie, vorzugsweise in allen Schritten des Verfahrens, aus erneuerbarer Energie stammt.

10. Metallurgische Anlage zur Herstellung von Roheisen (P) mit reduziertem CO₂-Fußabdruck, vorzugsweise durch Umsetzung des Verfahrens nach einem der Ansprüche 1 bis 8, wobei die metallurgische Anlage Folgendes umfasst:
- einen ersten elektrischen Vorwärmer (10), der dazu ausgelegt ist, Eisenerzfeinanteile (A) auf der Grundlage des Joule-Effekts und/oder Mikrowellenerwärmung zu vorgewärmten Eisenerzfeinanteilen (B) mit einer Temperatur über 600 °C vorzuwärmen;
- einen oder mehrere Wirbelschichtreaktoren (50), die dazu ausgelegt sind, die vorgewärmten Eisenerzfeinanteile (B) in Gegenwart von ausschließlich heißem Reduktionsgas (J) als ein Reduktionsmittel zu teilweise reduziertem Eisen (K, L) mit einem Metallisierungsgrad von 55 bis 75 %, vorzugsweise 60 bis 70 %, zu reduzieren;
- einen Lichtbogen-Reduktionsofen (70), der ein Bad aus geschmolzenem Metall mit einer oberen Schlackenschicht umfasst und dazu ausgelegt ist, das teilweise reduzierte Eisen (K, L) aufzunehmen und das teilweise reduzierte Eisen (K, L) in Gegenwart eines kohlenstoffhaltigen Materials (M) weiter zu reduzieren und zu schmelzen, um geschmolzenes Roheisen (P) zu erhalten;
wobei die metallurgische Anlage ferner einen oder mehrere Reformierungsreaktoren (40) umfasst, die dazu ausgelegt sind, aus einer Zufuhr von Erdgas oder Biomethan (F), einer Zufuhr von Hochofengas (G), einer oder mehreren Zufuhren von Abgas (O) des Lichtbogen-Reduktionsofens und anderen Abgasen (H) aus der metallurgischen Anlage oder einer Zufuhr von Mischungen aus zwei oder mehr davon sowie einer Zufuhr von Luft oder mit Sauerstoff angereicherter Luft, Wasserdampf oder Kohlendioxid (E) ein Synthesegas (I) zu erzeugen; wobei die metallurgische Anlage ferner eine Zufuhr von Wasserstoff (D) umfasst; eine Heißreduktionsgas-Mischvorrichtung, die fluidisch stromaufwärts mit dem einen oder den mehreren Reformierungsreaktoren (40) und mit dem Wasserstoffzufuhrstrom (D) verbunden ist, und optional mit einem oder mehreren der genannten Zufuhren eines Abgases (O) des Lichtbogen-Reduktionsofens und anderer Abgase (H) der metallurgischen Anlage oder einer Zufuhr von Gemischen aus zwei oder mehr davon verbunden ist, sowie stromabwärts mit einem Einlass des einen oder der mehreren Wirbelschichtreaktoren (50) fluidisch verbunden ist, wobei die Heißreduktionsgas-Mischvorrichtung so ausgelegt ist, dass sie Heißreduktionsgas (J) mit einer Temperatur über 550 °C bereitstellt, das Wasserstoff (D), Synthesegas (I), Abgas (O) des Lichtbogen-Reduktionsofens, andere Abgase (H) der metallurgischen Anlage oder Mischungen aus zwei oder mehr davon umfasst.

11. Metallurgische Anlage nach Anspruch 10, wobei der eine oder die mehreren Wirbelschichtreaktoren (50) vom Zirkulationstyp ist/sind.

12. Metallurgische Anlage nach Anspruch 10 oder 11, umfassend einen zweiten elektrischen Vorwärmer (20) auf Basis des Joule-Effekts und/oder der Mikrowellenerwärmung, der fluidisch zwischen der Zufuhr von Wasserstoff (D) und der Heißreduktionsgas-Mischvorrichtung angeschlossen ist, sowie einen dritten elektrischen Vorwärmer (30) auf Basis des Joule-Effekts und/oder der Mikrowellenerwärmung, der fluidisch zwischen der einen oder mehreren Zufuhren von Abgas (O) des Lichtbogen-Reduktionsofens und gegebenenfalls anderer Abgase (H) der metallurgischen Anlage und der Heißreduktionsgas-Mischvorrichtung angeschlossen ist, wobei der zweite und der dritte elektrische Vorwärmer (20, 30) dazu ausgelegt sind, das/die betreffende(n) Abgas(e) und das Synthesegas auf eine Temperatur über 700 °C vorzuwärmen.

13. Metallurgische Anlage nach einem der Ansprüche 10 bis 12, wobei das kohlenstoffhaltige Material (M) aus einer Quelle bereitgestellt wird, die Biokohle umfasst oder aus dieser besteht, die aus Biomasse hergestellt wurde, gegebenenfalls einschließlich Abbruchholz, beispielsweise bis zu 40 Gew.-%, und/oder Kunststoffabfällen, beispielsweise bis zu 20 Gew.-%.

14. Metallurgische Anlage nach einem der Ansprüche 10 bis 13, die ferner eine Heißbrikettiervorrichtung umfasst, die dazu ausgelegt ist, teilweise reduzierte Eisenerzfeinanteile (K) zu brikettiertem, teilweise reduziertem Eisen (L) zu brikettieren.

15. Metallurgische Anlage nach einem der Ansprüche 10 bis 14, wobei die metallurgische Anlage eine oder mehrere der folgenden Anlagen aufweist: eine Kokerei, eine Direktreduktionsanlage, einen Hochofen und einen Sauerstoff-Blaskonverter, die die anderen Abgase (H) der metallurgischen Anlage liefern.

16. Metallurgische Anlage nach einem der Ansprüche 10 bis 15, wobei die gesamte im Vorwärmer bzw. in den Vorwärmern und im Lichtbogen-Reduktionsofen benötigte elektrische Energie, vorzugsweise die für alle elektrischen Geräte der metallurgischen Anlage benötigte elektrische Energie, aus erneuerbarer Energie stammt.

## Revendications

1. Procédé de réduction d'empreinte carbone dans l'exploitation d'une usine métallurgique pour produire de la fonte grise (P), le procédé comprenant les étapes de :
a) préchauffage de fines de minerai de fer (A) dans un premier préchauffeur électrique (10) sur la base d'un chauffage par effet Joule et/ou par micro-ondes jusqu'à une température au-dessus de 600°C pour obtenir des fines de minerai de fer préchauffées (B) ;
b) réduction partielle des fines de minerai de fer préchauffées (B) dans un ou plusieurs réacteurs à lit fluidisé (50) en présence d'uniquement de gaz réducteur chaud (J) en tant que réducteur pour obtenir du fer partiellement réduit (K, L) ;
c) alimentation du fer partiellement réduit (K, L) dans un four à arc submergé (70) comprenant un bain de métal fondu avec une couche supérieure de laitier ;
d) réduction supplémentaire et fusion du fer partiellement réduit (K, L) à l'intérieur du four à arc submergé (70) en présence d'une matière carbonée (M) pour obtenir de la fonte grise fondue (P) ;
dans lequel, à l'étape b), le gaz réducteur chaud (J) comprend de l'hydrogène (D), un gaz de synthèse (I), un gaz effluent (O) du four à arc submergé, d'autres gaz effluents (H) provenant de l'usine métallurgique, ou des mélanges de deux ou plusieurs de ceux-ci, dans lequel ledit gaz de synthèse (I) est produit à partir de gaz naturel ou de biométhane (F), de gaz de haut-fourneau (G), d'un gaz effluent (O) du four à arc submergé, d'autres gaz effluents (H) provenant de l'usine métallurgique, ou de mélanges de deux ou plusieurs de ceux-ci, dans un ou plusieurs réacteurs de reformage (40) en présence d'air ou d'air enrichi en oxygène, de vapeur ou dioxyde de carbone (E) , à l'étape b), le gaz réducteur chaud (J) a une température au-dessus de 550°C ; et dans lequel, à l'étape b), le fer partiellement réduit (K, L) a un degré de métallisation de 55 à 75 %, préférablement 60 à 70 %.

2. Procédé selon la revendication 1, dans lequel le ou les réacteurs à lit fluidisé (50) est/sont d'un type à circulation.

3. Procédé selon la revendication 1 ou 2, dans lequel l'hydrogène (D) est préchauffé dans un deuxième préchauffeur électrique (20) et le gaz effluent (O) du four à arc submergé et les autres gaz effluents (H) facultatifs provenant de l'usine métallurgique sont préchauffés dans un troisième préchauffeur électrique (30), les deux des deuxième et troisième préchauffeurs électriques étant indépendamment basés sur un chauffage par effet Joule et/ou par micro-ondes jusqu'à une température au-dessus de 700°C.

4. Procédé selon l'une quelconque des revendications précédentes, dans lequel la matière carbonée (M) à l'étape d) comprend ou consiste en du biocharbon produit par biomasse, facultativement incluant du bois de démolition, tel que jusqu'à 40 % en poids, et/ou des déchets plastiques, tel que jusqu'à 20 % en poids.

5. Procédé selon l'une quelconque des revendications précédentes, dans lequel les fines de minerai de fer (A) ont une distribution de tailles de grains dans la plage 0,1 - 1 mm.

6. Procédé selon l'une quelconque des revendications précédentes, dans lequel l'étape b) comprend en outre le briquetage à chaud de fines de minerai de fer partiellement réduit (K) pour obtenir du fer partiellement réduit briqueté (L).

7. Procédé selon la revendication 6, dans lequel la matière carbonée (M) est au moins partiellement, de préférence entièrement, introduite dans le fer (L) partiellement réduit briqueté lors du briquetage à chaud et injecté dans le four à arc submergé (70) à l'étape d).

8. Procédé selon l'une quelconque des revendications précédentes, dans lequel les autres gaz effluents (H) de l'usine métallurgique comprennent un ou plusieurs gaz effluent(s) provenant d'une usine de four à coke, d'une usine de réduction directe du fer et d'un four à oxygène basique.

9. Procédé selon l'une quelconque des revendications précédentes, dans lequel toute l'énergie électrique nécessaire dans le/les préchauffeur(s) et le four à arc submergé, plus préférablement dans toutes les étapes du procédé, est de l'électricité renouvelable.

10. Usine métallurgique pour produire de la fonte grise (P) avec une empreinte carbone réduite, préférablement en mettant en œuvre le procédé selon l'une quelconque des revendications 1 à 8, l'usine métallurgique comprenant :
- un premier préchauffeur électrique (10) configuré pour préchauffer des fines de minerai de fer (A) sur la base d'un chauffage par effet Joule et/ou par micro-ondes en fines de minerai de fer préchauffées (B) à une température au-dessus de 600°C ;
- un ou plusieurs réacteurs à lit fluidisé (50) configurés pour une réduction partielle des fines de minerai de fer préchauffées (B) uniquement en présence d'un gaz réducteur chaud (J), en tant que réducteur, en fer partiellement réduit (K, L) à un degré de métallisation de 55 à 75 %, préférablement de 60 à 70 % ;
- un four à arc submergé (70) comprenant un bain de métal fondu avec une couche supérieure de laitier, configuré pour recevoir le fer partiellement réduit (K, L) et pour réduire davantage et fondre le fer partiellement réduit (K, L) en présence d'une matière carbonée (M) pour obtenir de la fonte grise fondue (P) ;
dans lequel l'usine métallurgique comprend en outre un ou plusieurs réacteurs de reformage (40) configurés pour produire un gaz de synthèse (I) à partir d'une alimentation de gaz naturel ou de biométhane (F), d'une alimentation de gaz de haut-fourneau (G), d'un ou de plusieurs gaz effluents (O) du four à arc submergé et d'autres gaz effluents (H) de l'usine métallurgique, ou d'une alimentation de mélanges de deux ou plusieurs de ceux-ci et d'une alimentation d'air ou d'air enrichi en oxygène, de vapeur ou dioxyde de carbone (E) ; dans lequel l'usine métallique comprend en outre une alimentation d'hydrogène (D) ; un dispositif de mélange de gaz réducteur chaud connecté fluidiquement en amont des un ou plusieurs réacteurs de reformage (40) et à l'alimentation d'hydrogène (D), et facultativement à un ou plusieurs desdits gaz effluents (O) du four à arc submergé et aux autres gaz effluents (H) de l'usine métallurgique ou à une alimentation de mélanges de deux ou plusieurs de ceux-ci, et en aval d'une entrée d'un ou plusieurs réacteurs à lit fluidisé (50), ledit dispositif de mélange de gaz réducteur chaud étant configuré pour fournir du gaz réducteur chaud (J) à une température au-dessus de 550°C comprenant de l'hydrogène (D), un gaz de synthèse (I), un gaz effluent (O) du four à arc submergé, d'autres gaz effluents (H) de l'usine métallurgique ou des mélanges de deux ou plusieurs ce ceux-ci.

11. Usine métallurgique selon la revendication 10, dans laquelle le ou les réacteurs à lit fluidisé (50) est/sont d'un type à circulation.

12. Usine métallurgique selon la revendication 10 ou 11, comprenant un deuxième préchauffeur électrique (20) basé sur un chauffage par effet Joule et/ou par micro-ondes fluidiquement connecté entre ladite alimentation d'hydrogène (D) et le dispositif de mélange de gaz réducteur chaud, et un troisième préchauffeur électrique (30) basé sur un chauffage par effet Joule et/ou par micro-ondes fluidiquement connecté entre ladite/lesdites alimentations de gaz effluents (O) du four à arc submergé et facultativement d'autres gaz effluents (H) de l'usine métallurgique et le dispositif de mélange de gaz réducteur chaud, lesdits deuxième et troisième préchauffeurs électriques (20, 30) étant configurés pour préchauffer le/les gaz effluents concernés et le gaz de synthèse jusqu'à une température au-dessus de 700°C.

13. Usine métallurgique selon l'une quelconque des revendications 10 à 12, dans laquelle la matière carbonée (M) est fournie à partir d'une source comprenant ou consistant en du biocharbon produit par biomasse, facultativement incluant du bois de démolition, tel que jusqu'à 40 % en poids, et/ou des déchets plastiques, tel que jusqu'à 20 % en poids.

14. Usine métallurgique selon l'une quelconque des revendications 10 à 13, comprenant en outre un appareil de briquetage à chaud configuré pour le briquetage de fines de minerai de fer partiellement réduit (K) en fer partiellement réduit briqueté (L).

15. Usine métallurgique selon l'une quelconque des revendications 10 à 14, dans laquelle l'usine métallurgique comprend un(e) ou plusieurs parmi une usine de four à coke, d'une usine de réduction directe du fer, un haut-fourneau et un four à oxygène basique fournissant lesdits autres gaz effluents (H) de l'usine métallurgique.

16. Usine métallurgique selon l'une quelconque des revendications 10 à 15, dans laquelle toute l'énergie électrique nécessaire dans le/les préchauffeur(s) et le four à arc submergé, préférablement l'énergie électrique nécessaire pour tous les dispositifs électrique de l'usine métallurgique, est de l'électricité renouvelable.
